# EUROPÄISCHE PATENTSCHRIFT

(11) **EP 3 250 486 B1**
(45) Veröffentlichungstag und Bekanntmachung des Hinweises auf die Patenterteilung: **19.02.2020**
(21) Anmeldenummer: 16700538.8
(22) Anmeldetag: 07.01.2016
(51) Int. Cl.: B65G 17/20, B65G 19/02, B65G 47/61, B65G 9/00

(54) **VERFAHREN ZUM BEFÜLLEN DER TASCHEN EINER TRANSPORTVORRICHTUNG IN FORM EINES HÄNGEFÖRDERERS SOWIE VORRICHTUNG ZUR DURCHFÜHRUNG DES VERFAHRENS**
METHOD FOR FILLING THE POCKETS OF A TRANSPORT DEVICE IN THE FORM OF A SUSPENSION CONVEYOR AND DEVICE FOR CARRYING OUT SAID METHOD
PROCÉDÉ POUR REMPLIR LES POCHES D'UN DISPOSITIF DE TRANSPORT SOUS LA FORME D'UN CONVOYEUR AÉRIEN ET DISPOSITIF POUR LA MISE EN OEUVRE DE CE PROCÉDÉ

(30) Priorität: 26.01.2015 CH 892015; 27.04.2015 CH 5722015
(43) Veröffentlichungstag der Anmeldung: 06.12.2017
(60) Teilanmeldung: 17187594.1
(73) Patentinhaber: Ferag AG, 8340 Hinwil (CH)
(72) Erfinder: FENILE, Roberto, 8623 Wetzikon (CH); KÄLIN, Erich, 8640 Rapperswil (CH)
(74) Vertreter: Rentsch Partner AG
(86) Internationale Anmeldenummer: PCT/EP2016/050160
(87) Internationale Veröffentlichungsnummer: WO 2016/120031

(56) Entgegenhaltungen:
- EP-A1- 1 420 106
- EP-A1- 2 786 940
- DE-A1- 2 221 318
- DE-A1-102004 018 569
- DE-A1-102008 061 685
- DE-A1-102012 018 925
- DE-A1-102012 108 757
- GB-A- 733 714

## Beschreibung

### TECHNISCHES GEBIET

Die vorliegende Erfindung bezieht sich auf das Gebiet der Fördertechnik. Sie betrifft ein Verfahren zum Befüllen der Taschen einer Transportvorrichtung in Form eines Hängeförderers.

Sie betrifft weiterhin eine Vorrichtung zur Durchführung des Verfahrens.

### STAND DER TECHNIK

Im Stand der Technik ist eine Vielzahl von Hängeförderern bekannt, bei denen das zu fördernde Fördergut von Transporttaschen aufgenommen wird, die vergleichsweise aufwändig ausgebildet sind und mit aufwändigen Öffnungs- und Verschlussmechanismen ausgestattet sind, die gerade bei einer grösseren Förderanlage mit vielen einzelnen Taschen einerseits einen erheblichen Mehraufwand bei der Errichtung einer neuen Anlage zur Folge haben und andererseits im Dauerbetrieb eine erhöhte Anfälligkeit für Fehlfunktionen oder einen vollständigen Funktionsausfall haben.

Die Druckschrift DE 10 2008 061 685 A1 offenbart eine Belade-Station für in einer Hänge-Förder-Anlage transportierte Transport-Taschen, mit einer oberen Zuführ-Schiene für die Transport-Taschen, mit einem sich an die Zuführ-Schiene anschließenden Senkrecht-Förderer zum Zuführen der Transport-Taschen in eine untere Belade-Position, mit einer Einrichtung zum Öffnen der Transport-Taschen in der Belade-Position und mit einer sich
an den Senkrecht-Förderer anschließenden unteren Abführ-Schiene zum Abführen der
Transport-Taschen aus der Belade-Position. Die DE 10 2008 061 685 A1 offenbart zudem ein Verfahren zum Befüllen der Taschen einer Transportvorrichtung in Form eines Hängeförderers, welche Transportvorrichtung einen oder mehrere Laufwagen umfasst, die an einer Laufschiene in Laufschienenrichtung beweglich gelagert sind und an denen jeweils nach unten hängend eine seitlich offene Tasche zur Aufnahme von Transportgut angeordnet ist, wobei die Tasche wenigstens eine, im geöffneten Zustand ebene, flexible Materialbahn umfasst, welche mit ihren beiden Enden unter Ausbildung einer nach unten hängenden Tragschlaufe bzw. Transportschlaufe am Laufwagen befestigt ist, die Schritte umfassend: (a) Heranführen einer Tasche im geschlossenen Zustand, (b) Öffnen der Tasche, (c) Einfüllen eines Transportgutes in die geöffnete Tasche, (d) Schliessen der Tasche und (e) Wegführen der befüllten und geschlossenen Tasche. Die in der DE 10 2008 061 685 A1 offenbarte Transportvorrichtung umfasst zudem eine Befüllvorrichtung zum Befüllen der oben beschriebenen Taschen, umfassend eine erste Vorrichtung zum Öffnen und Schließen der Tasche sowie eine zweite Vorrichtung zum Befüllen der geöffneten Tasche, wobei die zwei Vorrichtungen in einer Transportrichtung für die Tasche hintereinander und voneinander getrennt angeordnet sind.

Die Druckschrift DE 10 2008 026 720 A1 beschreibt eine Transport-Tasche mit einer Trage-Wand, die an ihrem oberen Bereich mit einer Trage-Kupplung und einem schwenkbaren Bügel, an ihrem unteren Bereich mit mindestens einer Kupplung, an ihrem oberen Bereich mit Mitteln zum Öffnen der Kupplung und mit Mitteln zum Schließen der Kupplung versehen ist und mit einer zumindest im unteren Bereich flexiblen Boden-Seiten-Wand, die in ihrem oberen Bereich mit dem schwenkbaren Bügel verbunden ist und in ihrem unteren Bereich mit Gegen-Kupplungs-Mitteln zur Aufnahme in der mindestens einen Kupplung versehen ist.

Die Druckschrift DE 10 2011 101 987 A1 offenbart eine Transporttasche zur Beförderung eines Fördergutes in einer Förderanlage, insbesondere einer Hängeförderanlage, mit einem Trägerteil, das zur Aufnahme an einem Förderstrang der Förderanlage ausgebildet ist, mit einem Ladehilfsmittel zur Aufnahme des Fördergutes, wobei das Ladehilfsmittel eine Verschlussklappe aufweist, die eine Handhabungslasche mit einem Klemmabschnitt aufweist, wobei das Trägerteil eine Klemmeinrichtung mit einem Klemmhebel aufweist, der zwischen einer Haltestellung, in der eine Haltekraft auf den Klemmabschnitt einwirkt, und einer Freigabestellung verlagerbar ist, und wobei der Klemmhebel in der Haltestellung derart mit dem Klemmabschnitt gekoppelt ist, dass das aufgenommene Fördergut durch sein Gewicht eine Erhöhung der Haltekraft bewirkt.

Die Druckschrift DE 10 2004 018 569 A1 beschreibt eine Sammeleinrichtung zum Aufnehmen von Objekten, insbesondere von Kleidungsstücken, beim sortierenden Sammeln der Objekte. Die Sammeleinrichtung umfasst eine Sammeltasche, die im Wesentlichen ein mit einem in eine Fördervorrichtung integrierbaren Mitnahmeelement versehenes Rahmengestell und einen am Rahmengestell hängenden Taschenbeutel aufweist, wobei das Mitnahmeelement und das Rahmengestell relativ zueinander um eine quer zur Förderrichtung liegende Achse schwenkbar sind, und wobei bei horizontaler Anordnung des Rahmengestells der Taschenbeutel geöffnet und bei vertikaler Anordnung des Rahmengestells der Taschenbeutel zusammengefallen und im Wesentlichen geschlossen ist.

Die Druckschrift DE 10 2012 108 757 A1 betrifft eine Tragetasche für eine Hängefördervorrichtung für den hängenden Transport von Objekten, aufweisend einen Halterahmen, einen Taschenbeutel, der am Halterahmen hängt und von dem zu transportierende Objekte aufnehmbar sind, und ein Aufhängeelement, welches mit dem Halterahmen verbunden ist und mittels dessen die Tragetasche an die Hängefördervorrichtung anhängbar ist, um von der Hängefördervorrichtung hängend transportiert zu werden. Der Taschenbeutel weist einen ersten und einen zweiten Beutelabschnitt auf, die jeweils einen mit dem Halterahmen verbundenen, ersten Beutelendabschnitt und einen vom Halterahmen abgewandten, zweiten Beutelendabschnitt aufweisen, wobei die zweiten Beutelendabschnitte über einen Gelenkmechanismus miteinander verbunden sind, welcher in eine Entladestellung bringbar ist, in welcher die zweiten Beutelendabschnitte in einem Abstand voneinander angeordnet sind, sodass der Taschenbeutel zur Abgabe von Objekten mit einer zwischen den zweiten Beutelendabschnitten gebildeten Auslassöffnung versehen ist, und welcher in eine Beladestellung bringbar ist, in welcher die zweiten Beutelendabschnitte zueinander benachbart angeordnet sind, sodass die Auslassöffnung geschlossen ist und der Taschenbeutel Objekte aufnehmen kann.

Die Druckschrift DE 10 2013 205 172 A1 offenbart eine Transporttasche zum hängenden Transport von Waren. Die Transporttasche hat eine steife Tragwand, die in ihrem in Transportstellung oberen Abschnitt mit einem Tragelement zum hängenden Tragen der Transporttasche verbunden ist. Eine flexible Waren-Haltewand bildet mit der Tragwand eine zumindest in der Transportstellung der Transporttasche nach unten und zu zwei gegenüberliegenden Seiten hin geschlossene Tragtasche. Die Tragwand ist mit der Haltewand zwischen einem in der Transportstellung oberen Wand-Verbindungsabschnitt und einem in der Transportstellung unteren Wand-Verbindungsabschnitt derart verbunden, dass eine Länge der bahnförmigen Haltewand zwischen den beiden Wand-Verbindungsabschnitten variabel an den Transport verschiedener Waren angepasst werden. Die Ausführung der Transporttasche ist derart, dass diese Längenanpassung der Haltewand durch eine Relativverlagerung der Haltewand zur Tragwand zumindest im Bereich eines der beiden Verbindungsabschnitte erfolgt.

In einer am 26. Januar 2015 hinterlegten (prioritätsgleichen) Schweizerischen Patentanmeldung CH 710650 A1 ist eine neuartige Transportvorrichtung beschrieben worden, bei der aus einer Materialbahn durch Aufhängen an beiden Enden unter Ausbildung einer Schlaufe seitlich offene Taschen gebildet werden, die an einem Laufwagen hängend an Laufschienen verfahren werden können. Die Taschen werden durch Aushängen des einen Endes der Materialbahn geöffnet und durch entsprechendes Einhängen wieder geschlossen.

### DARSTELLUNG DER ERFINDUNG

Es ist nun Aufgabe der Erfindung, ein Verfahren zum automatischen Befüllen solcher Taschen anzugeben und eine entsprechende Vorrichtung zur Durchführung des Verfahrens zu schaffen.

Diese und weitere Aufgaben werden durch die Merkmale der Ansprüche 1 und 9 gelöst.

Das erfindungsgemässe Verfahren ist vorgesehen zum Befüllen der Taschen einer Transportvorrichtung in Form eines Hängeförderers, welche Transportvorrichtung einen oder mehrere Laufwagen umfasst, die an einer Laufschiene in Laufschienenrichtung beweglich gelagert sind und an denen jeweils nach unten hängend eine seitlich offene Tasche zur Aufnahme von Transportgut angeordnet ist, wobei die Tasche durch wenigstens eine, im geöffneten Zustand ebene, flexible Materialbahn gebildet wird, welche mit ihren beiden Enden unter

Ausbildung einer nach unten hängenden Tragschlaufe bzw. Transportschlaufe am Laufwagen befestigt ist, und wobei die Befestigung der Materialbahn am Laufwagen an wenigstens einem Ende der Materialbahn lösbar ausgebildet ist.

Das erfindungsgemässe Verfahren ist gekennzeichnet durch die Schritte: (a) Heranführen einer Tasche im geschlossenen Zustand, (b) Öffnen der Tasche durch Lösen der lösbaren Befestigung des wenigstens einen Endes der Materialbahn am Laufwagen, (c) Einfüllen eines Transportgutes in die geöffnete Tasche, (d) Schliessen der Tasche durch Wiederbefestigen des wenigstens einen Endes der Materialbahn am Laufwagen, und (e) Wegführen der befüllten und geschlossenen Tasche.

Eine Ausgestaltung des Verfahren nach der Erfindung ist dadurch gekennzeichnet, dass das Heranführen der Tasche über eine erste Laufschiene erfolgt, und dass das Wegführen der befüllten und geschlossenen Tasche über eine zweite Laufschiene erfolgt, welche gegenüber der ersten Laufschiene versetzt angeordnet ist.

Insbesondere wird die Tasche mittels einer Befüllvorrichtung von der ersten Laufschiene zur zweiten Laufschiene transportiert, und es wird die Befüllung der Tasche während des Transports von der ersten Laufschiene zur zweiten Laufschiene in der Befüllvorrichtung vorgenommen.

Die Tasche wird dabei speziell während des Transports in der Befüllvorrichtung an einem Laufschienenstück hängend transportiert, welches einem Abschnitt der Laufschiene entspricht und welches wahlweise an ein Ende der ersten Laufschiene bzw. zweiten Laufschiene anschliessbar ist.

Eine andere Ausgestaltung des Verfahren nach der Erfindung ist dadurch gekennzeichnet, dass das wenigstens eine Ende der Materialbahn durch Einhaken des einen Endes am Laufwagen lösbar ausgebildet ist, dass im Schritt (b) das wenigstens eine Ende der Materialbahn ausgehakt wird, und dass im Schritt (d) das wenigstens eine Ende der Materialbahn wieder eingehakt wird.

Insbesondere ist dabei das andere Ende der Materialbahn mit dem Laufwagen fest verbunden.

Speziell ist am wenigstens einen Ende der Materialbahn ein Griffelement angeordnet, wobei zum Aus- bzw. Einhaken der Materialbahn eine Aushakvorrichtung bzw. Einhakvorrichtung das wenigstens einen Ende der Materialbahn am Griffelement erfasst und anhebt bzw. absenkt.

Eine weitere Ausgestaltung des Verfahren nach der Erfindung ist dadurch gekennzeichnet, dass beim Schritt (c) die geöffnete Tasche offen gehalten wird, indem die Materialbahn mit ihrem gelösten wenigstens einen Ende unter Ausbildung einer annähernd V-förmigen Öffnung zwischen den beiden Enden der Materialbahn auf einer schräg stehenden Stützfläche aufliegt und gestützt wird.

Die erfindungsgemässe Vorrichtung umfasst die Merkmale des Anspruchs 9.

Eine Ausgestaltung der Vorrichtung nach der Erfindung ist dadurch gekennzeichnet, dass die Befüllvorrichtung zwischen dem Ende einer ersten Laufschiene, über welche zu befüllende Taschen heranführbar sind, und dem vom Ende der ersten Laufschiene beabstandeten Anfang einer zweiten Laufschiene, über welche befüllte Taschen wegführbar sind, angeordnet ist, und dass die Befüllvorrichtung Transportvorrichtungen aufweist, welche zum Transport von Taschen vom Ende der ersten Laufschiene durch die erste, zweite und dritte Vorrichtung zum Anfang der zweiten Laufschiene ausgebildet sind.

Insbesondere weist die Befüllvorrichtung eine obere Transportvorrichtung und eine untere Transportvorrichtung auf, die parallel zueinander angeordnet sind, und deren Bewegungen miteinander synchronisiert ist, wobei die obere Transportvorrichtung zum Transport des Laufwagens einer Tasche ausgebildet ist, und die untere Transportvorrichtung zum Transport des vom Laufwagen gelösten wenigstens einen Endes der Materialbahn ausgebildet ist.

Dabei umfasst die obere Transportvorrichtung speziell ein endlos umlaufendes Transportmittel, welches eine Mehrzahl von Laufschienenstücken trägt, die jeweils zur Übernahme bzw. Übergabe von Laufwagen an das Ende der ersten Laufschiene bzw. an den Anfang einer zweiten Laufschiene fluchtend und nahtlos anschliessbar sind.

Dabei umfasst die untere Transportvorrichtung speziell ein endlos umlaufendes Transportmittel, mit welchem ein Griffelement am wenigstens einen Ende der Materialbahn nach dem Lösen der Befestigung am Laufwagen in Eingriff bringbar ist.

Dabei ist speziell parallel zu den beiden Transportvorrichtungen eine schräg stehende Stützfläche angeordnet, auf welcher beim Transport einer Tasche durch die Befüllvorrichtung die Materialbahn der Tasche mit ihrem gelösten wenigstens einen Ende unter Ausbildung einer annähernd V-förmigen Öffnung zwischen den beiden Enden der Materialbahn aufliegt und gestützt wird.

Die Stützfläche kann dabei z.B. in Form einer Platte oder dgl. statisch ausgebildet sein. Sie kann aber auch durch eine mitbewegtes Band realisiert werden.

Insbesondere ist dabei das wenigstens eine Ende der Tasche zum Schliessen der Tasche am Laufwagen einhakbar, wobei die erste Vorrichtung als Aushakvorrichtung ausgebildet ist und eine maschinell verfahrbare Betätigungsstange aufweist, an deren Ende ein Eingriffselement angeordnet ist, welches zum Öffnen der Tasche mit dem Griffelement am wenigstens einen Ende der Materialbahn in Eingriff bringbar ist.

Darüber hinaus kann die dritte Vorrichtung als Einhakvorrichtung ausgebildet sein und eine maschinell verfahrbare Betätigungsstange aufweisen, an deren Ende ein Eingriffselement angeordnet ist, welches zum Schliessen der Tasche mit dem Griffelement am wenigstens einen Ende der Materialbahn in Eingriff bringbar ist.

Eine andere Ausgestaltung der Vorrichtung nach der Erfindung ist dadurch gekennzeichnet, dass die zweite Vorrichtung als Zuführvorrichtung zum Zuführen von Transportgut zur geöffneten Tasche ausgebildet ist, und dass die Zuführvorrichtung ein Förderorgan aufweist.

Insbesondere kann das Förderorgan ein Transportband sein.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: in einer Seitenansicht ein für die vorliegende Erfindung geeignetes Beispiel einer Transportvorrichtung mit Laufschiene, Laufwagen und einer einhakbaren, eine Tasche bildenden Materialbahn im ausgehakten Zustand, wie es in der am 26. Januar 2015 hinterlegten (prioritätsgleichen) Schweizerischen Patentanmeldung CH 710650 A1 offenbart ist;
- Fig. 2: in der Seitenansicht die Vorrichtung aus Fig. 1 mit eine Tasche bildender eingehakter Materialbahn und darin transportiertem Transportgut;
- Fig. 3: in einer Seitenansicht ein für die vorliegende Erfindung geeignetes weiteres Beispiel einer Transportvorrichtung mit Laufschiene, Laufwagen und einer einhakbaren, eine Tasche bildenden Materialbahn im eingehakten Zustand, wie es in der Patentanmeldung am 26. Januar 2015 hinterlegten (prioritätsgleichen) Schweizerischen Patentanmeldung CH 710650 A1 offenbart ist;
- Fig. 4: die Vorrichtung aus Fig. 3 in Laufrichtung gesehen; und
- Fig. 5a-g: ein Ausführungsbeispiel einer Vorrichtung nach der Erfindung mit verschiedenen Schritten bei der Befüllung von über getrennte Laufschienen herangebrachten und weggeführten Taschen der in Fig. 3 und 4 gezeigten Art.

### WEGE ZUR AUSFÜHRUNG DER ERFINDUNG

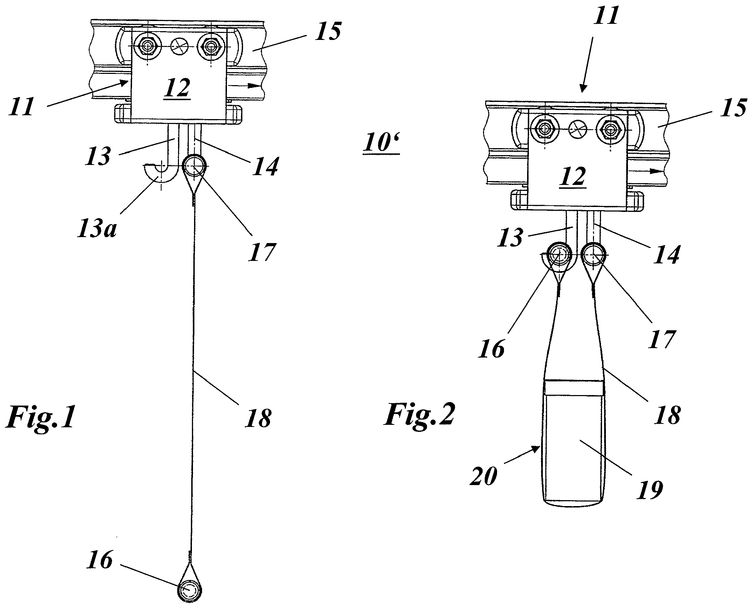

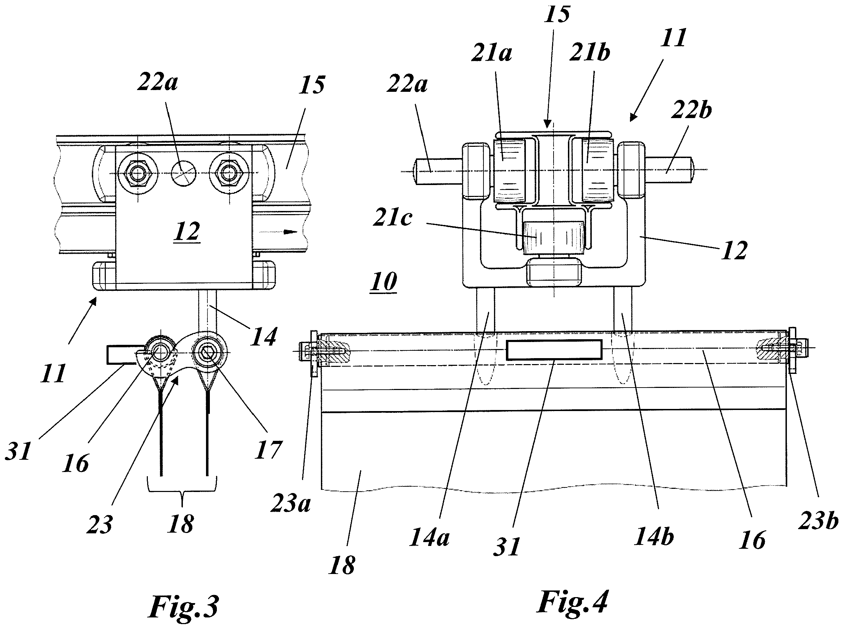

Die Transportvorrichtung 10' der Fig. 1 und 2 umfasst eine sich in einer Förderrichtung (Pfeil in Fig. 1) erstreckende, im Beispiel der Fig. 1 horizontal verlaufende, Laufschiene 15, die im gezeigten Beispiel aus einem mehrfach gebogenen Blechstreifen symmetrisch zu einer vertikalen Mittelebene hergestellt ist und zwei gegenüberliegende Tragschienen und eine unten in der Mitte ausgebildete Führungsschiene mit rechteckigem Profil aufweist. An der Laufschiene 15 hängend ist ein Laufwagen 11 in Schienenrichtung beweglich geführt. Der Laufwagen 11 hat einen U-förmigen Wagenkörper 12 (siehe Fig. 4), der an beiden Schenkeln jeweils ein Paar von tragenden Laufrollen 21a und 21b und im unteren Bereich führende Laufrollen 21c trägt, mit denen er in die Laufschiene 15 seitlich und von unten eingreift.

Zwischen den seitlichen Laufrollenpaaren 21a und 21b ist jeweils ein seitlich nach aussen abstehender Mitnehmer 22a und 22b am Wagenkörper 12 angebracht, der den Wagen bei Bedarf in Eingriff mit einer Antriebsvorrichtung, einer Bremsvorrichtung, einer Schaltvorrichtung oder dgl. bringen kann. Vom unteren Boden des U-förmigen Wagenkörpers 12 stehen senkrecht nach unten ein Paar von quer zur Schienenrichtung beabstandeten Befestigungselementen 14 bzw. 14a,b (Fig. 4) und ein Paar von in Laufrichtung dahinter angeordneten Tragelementen 13 ab.

Die beiden stangenförmigen Befestigungselemente 14 bzw. 14a,b sind am unteren Ende fest mit einer sich horizontal und quer und symmetrisch zur Schienenrichtung erstreckenden ersten Querstange 17 verbunden. Die Tragelemente 13 mit dem zugehörigen Haken 13a nehmen eine parallel zur ersten Querstange 17 angeordnete zweite Querstange 16 auf, die gewissermassen in die Haken 13a "eingehakt" und wieder herausgenommen oder ausgehakt werden kann.

Jede der beiden Querstangen 16 und 17 steckt in einer zugehörigen endseitig ausgebildeten, vernähten Schlaufe der Tasche 20 einer rechteckigen Materialbahn 18, die eine vorgegebene Breite und Länge aufweist. Im ausgehängten Zustand (Fig. 1) hängt die Materialbahn 18 nur über die Querstange 17 am Laufwagen 11 und mit der freien Querstange 16 senkrecht nach unten und hat so die Form einer ebenen Bahn. Im eingehängten Zustand (Fig. 2), bei dem die Querstange 16 in die hakenförmigen Tragelemente 13 eingehängt ist, bildet die Materialbahn 18 eine seitlich offene Trag- oder Transportschlaufe bzw. Tasche 20, in die ein zu förderndes Transportgut 19, z.B. ein Paket, Päckchen oder dgl., eingelegt sein kann.

Das Ausführungsbeispiel der Fig. 3 und 4, welches eine Transportvorrichtung 10 zeigt, unterscheidet sich vom Ausführungsbeispiel der Fig. 1 und 2 (Transportvorrichtung 10') dadurch, dass auf die am Wagenkörper 12 angebrachten hakenförmigen Tragelemente 13 ganz verzichtet wird und stattdessen zur Aufnahme der Querstange 16 Haken 23 bzw. 23a,b an den äusseren Enden der Querstange 17 angebracht sind.

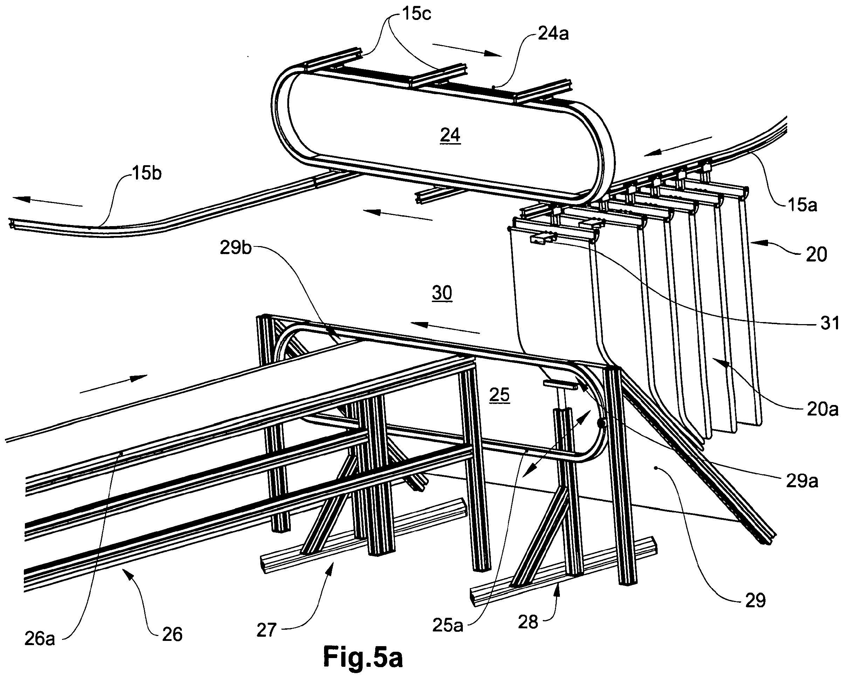

Von diesem Ausführungsbeispiel einer Transportvorrichtung ausgehend soll nachfolgend am Ausführungsbeispiel einer Befüllvorrichtung die vorliegende Erfindung näher erläutert werden. Die Fig. 5a-g zeigen dabei verschiedene Momentausnahmen aus einer Animation, welche einen Befüllvorgang mit dieser Befüllvorrichtung schematisch und stark vereinfacht wiedergibt.

Gemäss Fig. 5a ist die beispielhafte Befüllvorrichtung 30 zwischen dem Ende einer ersten Laufschiene 15a, über welche der Befüllvorrichtung 30 Taschen 20 zugeführt werden, und dem Anfang einer zweiten Laufschiene 1 5b, über welche die befüllten Taschen weggeführt werden, angeordnet. Im Beispiel sind die beiden Laufschienen 1 5a und 15b relativ zueinander quer zur Laufrichtung seitlich versetzt. Es sind aber auch andere Konfigurationen denkbar, z.B. ein vertikaler Versatz der Laufschienen.

Die Befüllvorrichtung 30 weist zwei den seitlichen Versatz zwischen den Lauschienen 15a und 15b überbrückende Transportvorrichtungen 24 und 25 auf, die jeweils ein endlos umlaufendes Transportmittel (Kette, Band oder dgl.) 24a bzw. 25a umfassen und sich in Richtung der in Fig. 5a eingezeichneten Pfeile synchron miteinander bewegen. Die Antriebe und Führungselemente der Transportvorrichtungen 24 und 25 sind der Einfachheit halber nicht gezeigt.

Das umlaufende Transportmittel 24a der oberen Transportvorrichtung 24 trägt eine Mehrzahl von untereinander gleichmässig beabstandeten Laufschienenstücken 15c, die jeweils dasselbe Profil aufweisen, wie die Laufschienen 15a und 15b und in bestimmten Stellungen des Transportmittels 24 so in Eingriff mit den Laufschienen 1 5a und 1 5b gebracht werden können, dass Taschen 20 mit ihren Laufwagen 11 übergangslos von der Laufschiene 1 5a auf ein anschliessendes Laufschienenstück 15c bzw. vom Laufschienenstück 15c auf die anschliessende Laufschiene 1 5b überführt werden können. Die Transportvorrichtung 24 kann so eine Tasche 20 mit ihrem Laufwagen 11 von der Laufschiene 15a übernehmen und dann quer zur Laufrichtung zur Laufschiene 15b transportieren und dort wieder abgeben.

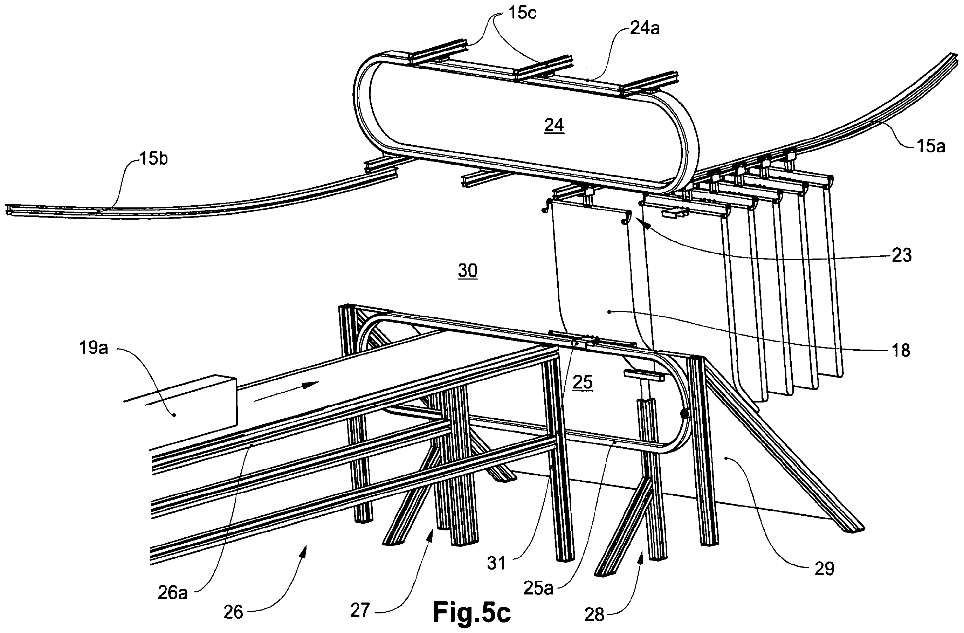

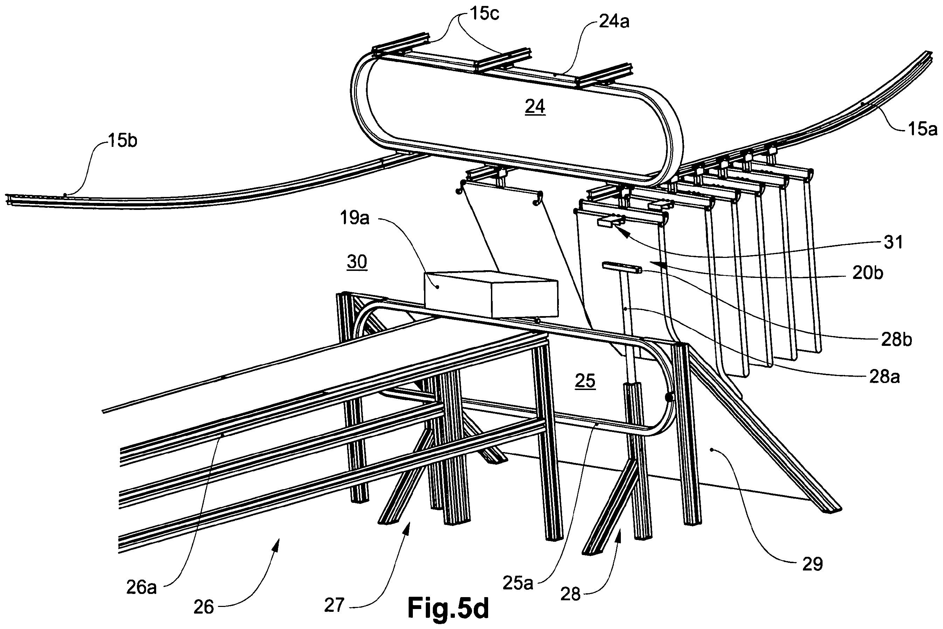

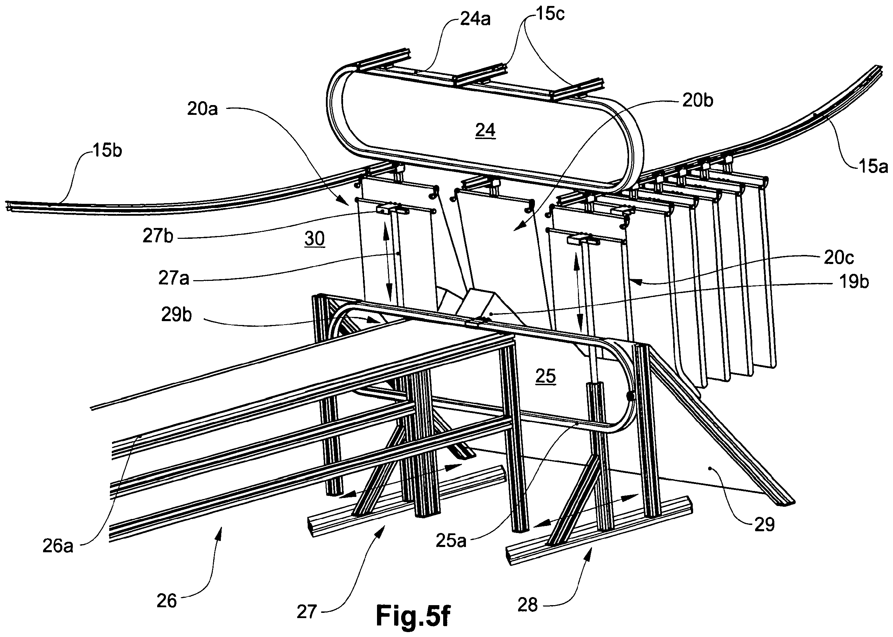

Das umlaufende Transportmittel 25a der unteren Transportvorrichtung 25 nimmt gleichzeitig ein an der aushakbaren Querstange 16 einer Tasche 20a aussen befestigtes Griffelement 31 auf, wenn die Tasche 20a durch Aushaken der Querstange 16 geöffnet worden ist und das ausgehakte Ende der Materialbahn 18 mit dem Griffelement 31 auf die Transportvorrichtung 25 abgesenkt worden ist (Fig. 5c). Die geöffnete Tasche 20 bzw. 20a wird mittels der beiden Transportvorrichtungen 24 und 25 gleichzeitig quer zu den Laufschienen 1 5a und 15b durch die Befüllvorrichtung 30 transportiert und dabei befüllt (Fig. 5d) und wieder geschlossen (Fig. 5f). Um die geöffnete Tasche dabei stabil zu halten, ist eine schräg stehende Stützfläche 29 vorgesehen, die mit der oberen Kante an den oberen Trum der unteren Transportvorrichtung 25 anschliesst und auf der die Materialbahn 18 von der ausgehakten Querstange 16 bis zu ihrer Schlaufe aufliegt.

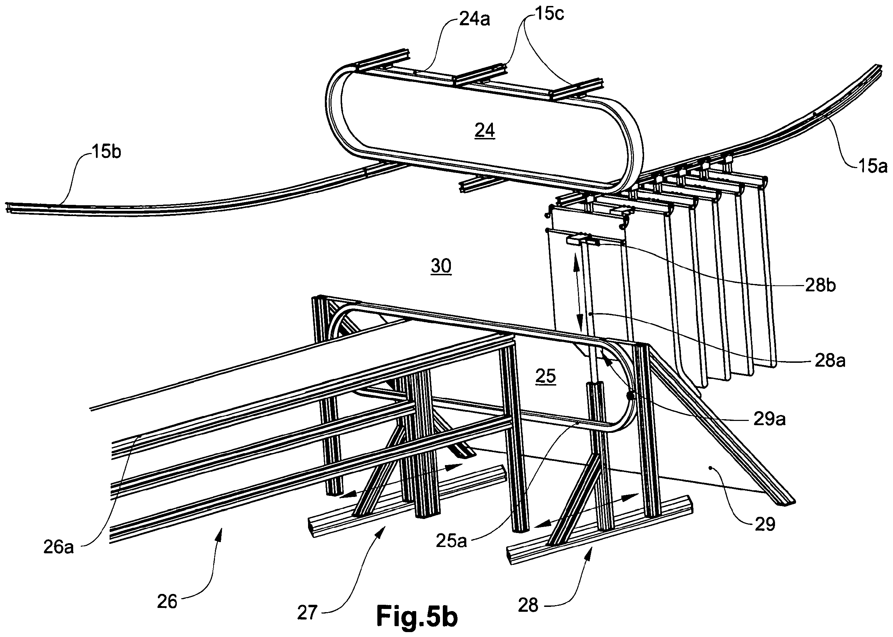

Zum Öffnen (Aushaken) und Schliessen (Einhaken) der Tasche 20 bzw. 20a sind am Anfang und am Ende der Befüllvorrichtung eine Aushakvorrichtung 28 und eine Einhakvorrichtung 27 angeordnet, die automatisch betätigt werden. Die Aushakvorrichtung 28 hat eine vertikal verfahrbare Betätigungsstange 28a, an deren freiem Ende ein querliegendes Eingriffselement 28b befestigt ist, mit dem die Betätigungsstange 28a in Eingriff mit dem Griffelement 31 einer Tasche 20 bzw. 20a gebracht werden kann, um die vordere Querstange 16 der Tasche 20 bzw. 20a auszuhaken (Fig. 5b). Damit dies möglich wird, kann die Betätigungsstange 28a mit ihrer Antriebsmechanik durch eine Aussparung 29a in der Stützfläche 29 in Schienenrichtung an die zu öffnende Tasche herangefahren werden (Fig. 5b). Entsprechend kann die Einhakvorrichtung 27 mit ihrer Betätigungsstange 27a und ihrem Eingriffselement 27b durch eine Aussparung 29b in der Stützfläche 29 in Schienenrichtung an die zu schliessende Tasche herangefahren werden (Fig. 5f).

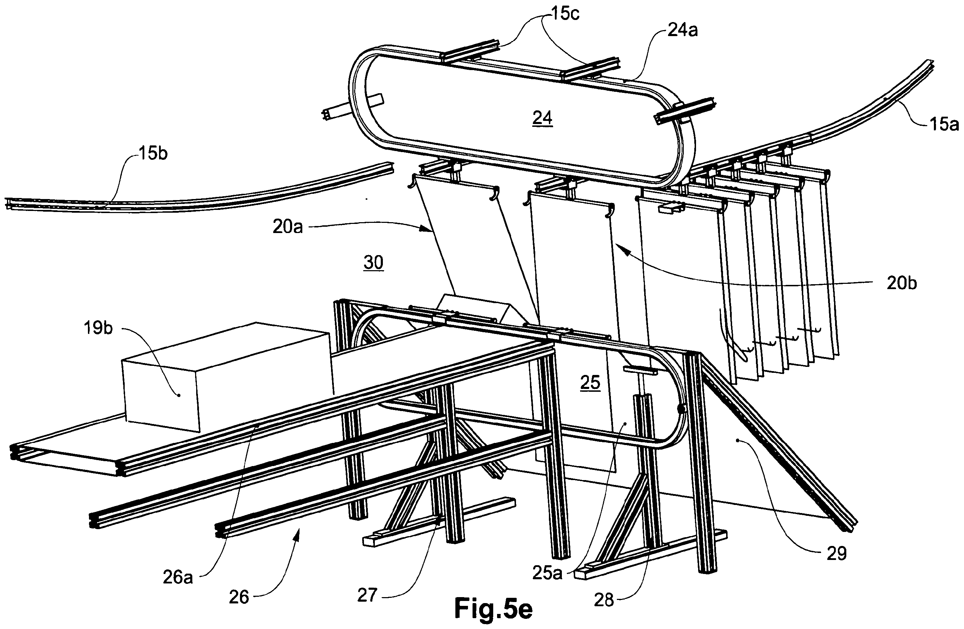

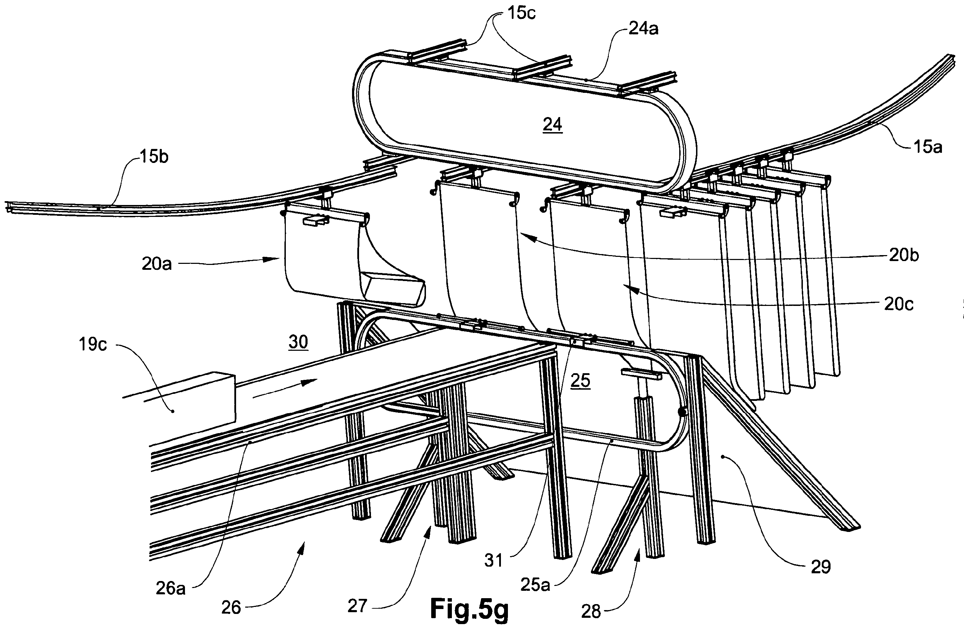

Zwischen der Aushakvorrichtung 28 und der Einhakvorrichtung 27 ist in der Befüllvorrichtung 30 eine Zuführvorrichtung 26 angeordnet, über die das in die Taschen einzufüllende Transportgut, z.B. ein Paket 19a (Fig. 5c), zugeführt und in die geöffnete Tasche hineingelenkt werden kann. Im Ausführungsbeispiel der Fig. 5 ist die Zuführvorrichtung 26 mit einem Transportband 26a ausgerüstet, das an der oberen Kante der Führungsfläche 29 endet.

Die Fig. 5a-g machen deutlich, dass mit der abgebildeten Befüllvorrichtung 30 gleichzeitig drei Taschen 20a, 20b und 20c bearbeitet werden können:
In Fig. 5a befindet sich die erste zu füllende Tasche 20a noch ungeöffnet mit ihrem Laufwagen auf einem Laufschienenstück 15 der oberen Transportvorrichtung.
In Fig. 5b ist die Aushakvorrichtung 28 mit ihren Betätigungsorganen 28a und 28b durch die Aussparung 29a in Richtung auf die Laufschiene 15a vorgefahren und hat durch vertikales Ausfahren der Organe unter das Griffelement 31 der Tasche 20a die vordere Querstange 16 ausgehakt und damit die Tasche geöffnet.
In Fig. 5c hat die Aushakvorrichtung 28 durch Zurückfahren der Betätigungsorgane 28a und 28b das ausgehakte Ende der Tasche bzw. Materialbahn 18 mit dem Griffelement 31 auf der unteren Transportvorrichtung 25 abgelegt und beide Transportvorrichtungen 24 und 25 haben die geöffnete Tasche bereits ein Stück weit in Querrichtung zur Zuführvorrichtung 26 transportiert.
In Fig. 5d befindet sich die erste Tasche 20a vor der Zuführvorrichtung und wird mit einem Paket 19a befüllt. Gleichzeitig ist am Anfang der Befüllvorrichtung 30 eine zweite Tasche 20b nachgerutscht und wird von der Aushakvorrichtung 28 in der bereits beschriebenen Weise geöffnet.
In Fig. 5e wird die befüllte, offene erste Tasche 20a zum Schliessen zur Einhakvorrichtung 27 weitertransportiert, während gleichzeitig die zweite Tasche 20b in den Bereich der Zuführvorrichtung 26 gelangt, die bereits ein weiteres Paket 19b heranführt.
In Fig. 5f wird die erste Tasche 20a mittels der Einhakvorrichtung 27 geschlossen und die zweite Tasche 20b mit dem Paket 19b befüllt, während eine dritte Tasche 20c von der Aushakvorrichtung 28 gerade geöffnet wird.
In der Fig. 5g schliesslich wird die erste Tasche 20a, die befüllt und geschlossen ist, über die Laufschiene 15b weggeführt, die zweite Tasche 20b ist befüllt und die dritte Tasche 20c ist geöffnet und bereit zum Quertransport.

## Patentansprüche

1. Verfahren zum Befüllen der Taschen (20; 20a-c) einer Transportvorrichtung (10) in Form eines Hängeförderers, welche Transportvorrichtung (10) einen oder mehrere Laufwagen (11) umfasst, die an einer Laufschiene (15; 15a,b) in Laufschienenrichtung beweglich gelagert sind und an denen jeweils nach unten hängend eine seitlich offene Tasche (20; 20a-c) zur Aufnahme von Transportgut (19, 19a-c) angeordnet ist, wobei die Tasche (20; 20a-c) durch wenigstens eine, im geöffneten Zustand ebene, flexible Materialbahn (18) gebildet wird, welche mit ihren beiden Enden unter Ausbildung einer nach unten hängenden Tragschlaufe bzw. Transportschlaufe am Laufwagen (11) befestigt ist, und wobei die Befestigung der Materialbahn (18) am Laufwagen (11) an wenigstens einem Ende (16) der Materialbahn (18) lösbar ausgebildet ist, die ***das Verfahren umfassend die Schritte: (a) Heran***führen einer Tasche (20; 20a-c) im geschlossenen Zustand, (b) Öffnen der Tasche (20; 20a-c) durch Lösen der lösbaren Befestigung des wenigstens einen Endes (16) der Materialbahn (18) am Laufwagen (11), (c) Einfüllen eines Transportgutes (19; 19a-c) in die geöffnete Tasche (20; 20a-c), (d) Schliessen der Tasche (20; 20a-c) durch Wiederbefestigen des wenigstens einen Endes (16) der Materialbahn (18) am Laufwagen (11), und (e) Wegführen der befüllten und geschlossenen Tasche (20; 20a-c).

2. Verfahren nach Anspruch 1, **dadurch gekennzeichnet, dass** das Heranführen der Tasche (20; 20a-c) über eine erste Laufschiene (15a) erfolgt, und dass das Wegführen der befüllten und geschlossenen Tasche (20; 20a-c) über eine zweite Laufschiene (15b) erfolgt, welche gegenüber der ersten Laufschiene (15a) versetzt angeordnet ist

3. Verfahren nach Anspruch 2, **dadurch gekennzeichnet, dass** die Tasche (20; 20a-c) mittels einer Befüllvorrichtung (30) von der ersten Laufschiene (15a) zur zweiten Laufschiene (15b) transportiert wird, und dass die Befüllung der Tasche (20; 20a-c) während des Transports von der ersten Laufschiene (15a) zur zweiten Laufschiene (15b) in der Befüllvorrichtung (30) vorgenommen wird.

4. Verfahren nach Anspruch 3, **dadurch gekennzeichnet, dass** die Tasche (20; 20a-c) während des Transports in der Befüllvorrichtung (30) an einem Laufschienenstück (15c) hängend transportiert wird, welches einem Abschnitt der Laufschiene (15) entspricht und welches wahlweise an ein Ende der ersten Laufschiene (15a) bzw. zweiten Laufschiene (15b) anschliessbar ist.

5. Verfahren nach Anspruch 1, **dadurch gekennzeichnet, dass** das wenigstens eine Ende (16) der Materialbahn (18) durch Einhaken des einen Endes (16) am Laufwagen (11) lösbar ausgebildet ist, dass im Schritt (b) das wenigstens eine Ende der Materialbahn (18) ausgehakt wird, und dass im Schritt (d) das wenigstens eine Ende (16)der Materialbahn (18)wieder eingehakt wird.

6. Verfahren nach Anspruch 5, **dadurch gekennzeichnet, dass** das andere Ende (17) der Materialbahn mit dem Laufwagen (11) fest verbunden ist.

7. Verfahren nach Anspruch 6, **dadurch gekennzeichnet, dass** am wenigstens einen Ende (16) der Materialbahn (18) ein Griffelement (31) angeordnet ist, und dass zum Aus- bzw. Einhaken der Materialbahn (18) eine Aushakvorrichtung (28) bzw. Einhakvorrichtung (27) das wenigstens einen Ende (16) der Materialbahn (18) am Griffelement (31) erfasst und anhebt bzw. absenkt.

8. Verfahren nach Anspruch 1, **dadurch gekennzeichnet, dass** beim Schritt (c) die geöffnete Tasche (20; 20a-c) offen gehalten wird, indem die Materialbahn (18) mit ihrem gelösten wenigstens einen Ende (16) unter Ausbildung einer annähernd V-förmigen Öffnung zwischen den beiden Enden (16, 17) der Materialbahn (18) auf einer schräg stehenden Stützfläche (29) aufliegt und gestützt wird.

9. Transportvorrichtung (10) in Form eines Hängeförderers, welche Transportvorrichtung (10) einen oder mehrere Laufwagen (11) umfasst, die an einer Laufschiene (15; 15a,b) in Laufschienenrichtung beweglich gelagert sind und an denen jeweils nach unten hängend eine seitlich offene Tasche (20; 20a-c) zur Aufnahme von Transportgut (19, 19a-c) angeordnet ist, wobei die Tasche (20; 20a-c) durch wenigstens eine, im geöffneten Zustand ebene, flexible Materialbahn (18) gebildet wird, welche mit ihren beiden Enden unter Ausbildung einer nach unten hängenden Tragschlaufe bzw. Transportschlaufe am Laufwagen (11) befestigt ist, und wobei die Befestigung der Materialbahn (18) am Laufwagen (11) an wenigstens einem Ende (16) der Materialbahn (18) lösbar ausgebildet ist; die Transportvorrichtung (10) weiter umfassend eine Befüllvorrichtung (30) zum Befüllen der Taschen (20; 20a-c) gemäss dem Verfahren nach einem der Ansprüche 1 bis 8, die Befüllvorrichtung (30) umfassend eine erste Vorrichtung (28; 28a,b) zum Öffnen der Tasche (20; 20a-c), eine zweite Vorrichtung (26, 26a) zum Befüllen der geöffneten Tasche (20; 20a-c) und eine dritte Vorrichtung (27; 27a,b) zum Schliessen der befüllten Tasche (20; 20a-c), wobei die drei Vorrichtungen in einer Transportrichtung für die Tasche (20; 20a-c) hintereinander und voneinander getrennt angeordnet sind.

10. Transportvorrichtung (10) nach Anspruch 9, **dadurch gekennzeichnet, dass** die Befüllvorrichtung (30) zwischen dem Ende einer ersten Laufschiene (15a), über welche zu befüllende Taschen (20; 20a-c) heranführbar sind, und dem vom Ende der ersten Laufschiene (15a) beabstandeten Anfang einer zweiten Laufschiene (15b), über welche befüllte Taschen (20; 20a-c) wegführbar sind, angeordnet ist, und dass die Befüllvorrichtung (30) Transportvorrichtungen (24, 24a; 25, 25a) aufweist, welche zum Transport von Taschen (20; 20a-c) vom Ende der ersten Laufschiene (1 5a) durch die erste, zweite und dritte Vorrichtung (26, 26a; 27; 27a,b; 28; 28a,b) zum Anfang der zweiten Laufschiene (15b) ausgebildet sind, wobei die Befüllvorrichtung (30) vorzugsweise eine obere Transportvorrichtung (24, 24a) und eine untere Transportvorrichtung (25, 25a) aufweist, die parallel zueinander angeordnet sind, und deren Bewegungen miteinander synchronisiert ist, dass die obere Transportvorrichtung (24, 24a) zum Transport des Laufwagens (11) einer Tasche (20; 20a-c) ausgebildet ist, und dass die untere Transportvorrichtung (25, 25a) zum Transport des vom Laufwagen (11) gelösten wenigstens einen Endes (16) der Materialbahn (18) ausgebildet ist.

11. Transportvorrichtung (10) nach Anspruch 10, **dadurch gekennzeichnet, dass** die obere Transportvorrichtung (24, 24a) ein endlos umlaufendes Transportmittel (24a) umfasst, welches eine Mehrzahl von Laufschienenstücken (15c) trägt, die jeweils zur Übernahme bzw. Übergabe von Laufwagen (11) an das Ende der ersten Laufschiene (15a) bzw. an den Anfang einer zweiten Laufschiene (15b) fluchtend und nahtlos anschliessbar sind und die untere Transportvorrichtung (25, 25a) vorzugsweise ein endlos umlaufendes Transportmittel (25a) umfasst, mit welchem ein Griffelement (31) am wenigstens einen Ende (16) der Materialbahn (18) nach dem Lösen der Befestigung am Laufwagen (11) in Eingriff bringbar ist.

12. Transportvorrichtung (10) nach Anspruch 10, **dadurch gekennzeichnet, dass** parallel zu den beiden Transportvorrichtungen (24, 24a; 25, 25a) eine schräg stehenden Stützfläche (29) angeordnet ist, auf welcher beim Transport einer Tasche (20; 20a-c) durch die Befüllvorrichtung (30) die Materialbahn (18) der Tasche (20; 20a-c) mit ihrem gelösten wenigstens einen Ende (16) unter Ausbildung einer annähernd V-förmigen Öffnung zwischen den beiden Enden (16, 17) der Materialbahn (18) aufliegt und gestützt wird.

13. Transportvorrichtung (10) nach Anspruch 11, **dadurch gekennzeichnet, dass** das wenigstens eine Ende (16) der Tasche (20; 20a-c) zum Schliessen der Tasche (20; 20a-c) am Laufwagen (11) einhakbar ist, und dass die erste Vorrichtung (28; 28a,b) als Aushakvorrichtung (28) ausgebildet ist und eine maschinell verfahrbare Betätigungsstange (28a) aufweist, an deren Ende ein Eingriffselement (28b) angeordnet ist, welches zum Öffnen der Tasche mit dem Griffelement (31) am wenigstens einen Ende (16) der Materialbahn (18) in Eingriff bringbar ist.

14. Transportvorrichtung (10) nach Anspruch 13, **dadurch gekennzeichnet, dass** die dritte Vorrichtung (27; 27a,b) als Einhakvorrichtung (27) ausgebildet ist und eine maschinell verfahrbare Betätigungsstange (27a) aufweist, an deren Ende ein Eingriffselement (27b) angeordnet ist, welches zum Schliessen der Tasche mit dem Griffelement (31) am wenigstens einen Ende (16) der Materialbahn (18) in Eingriff bringbar ist.

15. Transportvorrichtung (10) nach Anspruch 9, **dadurch gekennzeichnet, dass** die zweite Vorrichtung (26, 26a) als Zuführvorrichtung (26) zum Zuführen von Transportgut (19; 19a-c) zur geöffneten Tasche (20; 20a-c) ausgebildet ist, und dass die Zuführvorrichtung (26) ein Förderorgan (26a) aufweist, wobei das Förderorgan vorzugsweise ein Transportband (26a) ist.

## Claims

1. Method for filling the pockets (20; 20a-c) of a transporting apparatus (10) in the form of an overhead conveyor, which transporting apparatus (10) comprises one or more carriages (11), which are mounted on a running rail (15; 15a, b) for movement in the running-rail direction and on which a laterally open pocket (20; 20a-c) for accommodating items (19, 19a-c) is arranged in a downwardly hanging state in each case, wherein the pocket (20; 20a-c) is formed by at least one flexible material web (18), which is planar in the open state and has its two ends fastened on the carriage (11) to form a downwardly hanging carrying loop or transporting loop, respectively, and wherein the fastening of the material web (18) on the carriage (11) is of releasable design at at least one end (16) of the material web (18), the method comprising the following steps:
(a) advancing up a pocket (20; 20a-c) in the closed state,
(b) opening the pocket (20; 20a-c) by releasing the releasable fastening of the at least one end (16) of the material web (18) on the carriage (11),
(c) introducing an item (19; 19a-c) into the opened pocket (20; 20a-c),
(d) closing the pocket (20; 20a-c) by refastening the at least one end (16) of the material web (18) on the carriage (11), and
(e) guiding away the filled and closed pocket (20; 20a-c) .

2. Method according to Claim 1, **characterized in that** the pocket (20; 20a-c) is advanced up via a first running rail (15a), and **in that** the filled and closed pocket (20; 20a-c) is guided away via a second running rail (15b), which is arranged in an offset state in relation to the first running rail (15a).

3. Method according to Claim 2, **characterized in that** the pocket (20; 20a-c) is transported from the first running rail (15a) to the second running rail (15b) by means of a filling apparatus (30), and **in that** the pocket (20; 20a-c) is filled while being transported from the first running rail (15a) to the second running rail (15b) in the filling apparatus (30).

4. Method according to Claim 3, **characterized in that**, during transportation in the filling apparatus (30), the pocket (20; 20a-c) is transported in a hanging state on a running-rail section (15c) which corresponds to a portion of the running rail (15) and can be connected selectively to one end of the first running rail (15a) or second running rail (15b), respectively.

5. Method according to Claim 1, **characterized in that** the at least one end (16) of the material web (18) is of releasable design by virtue of the one end (16) being hooked in on the carriage (11), **in that**, in step (b), the at least one end of the material web (18) is unhooked, and **in that**, in step (d), the at least one end (16) of the material web (18) is hooked in again.

6. Method according to Claim 5, **characterized in that** the other end (17) of the material web is fixed to the carriage (11).

7. Method according to Claim 6, **characterized in that** a grip element (31) is arranged at the at least one end (16) of the material web (18), and **in that**, for the purpose of unhooking the material web (18) and hooking it in, respectively, an unhooking device (28) and a hooking-in device (27), respectively, grips the at least one end (16) of the material web (18) at the grip element (31) and respectively raises or lowers the same.

8. Method according to Claim 1, **characterized in that**, in step (c), the opened pocket (20; 20a-c) is held open by virtue of the material web (18) resting, and being supported, on an obliquely positioned supporting surface (29) by way of its released at least one end (16), an approximately V-shaped opening being formed in the process between the two ends (16, 17) of the material web (18) .

9. Transporting apparatus (10) in the form of an overhead conveyor, which transporting apparatus (10) comprises one or more carriages (11), which are mounted on a running rail (15; 15a, b) for movement in the running-rail direction and on which a laterally open pocket (20; 20a-c) for accommodating items (19, 19a-c) is arranged in a downwardly hanging state in each case, wherein the pocket (20; 20a-c) is formed by at least one flexible material web (18), which is planar in the open state and has its two ends fastened on the carriage (11) to form a downwardly hanging carrying loop or transporting loop, respectively, and wherein the fastening of the material web (18) on the carriage (11) is of releasable design at at least one end (16) of the material web (18); the transporting apparatus (10) further comprising a filling apparatus (30) for filling the pockets (20; 20a-c) according to the method according to one of Claims 1 to 8, the filling apparatus (30) comprising a first apparatus (28; 28a-b) for opening the pocket (20; 20a-c), a second apparatus (26, 26a) for filling the opened pocket (20; 20a-c) and a third apparatus (27; 27a, b) for closing the filled pocket (20; 20a-c), wherein the three apparatuses are arranged one behind the other, and separately from one another, in a transporting direction for the pocket (20; 20a-c).

10. Transporting apparatus (10) according to Claim 9, **characterized in that** the filling apparatus (30) is arranged between the end of a first running rail (15a), via which pockets (20; 20a-c) which are to be filled can be advanced up, and the start of a second running rail (15b) which is at a distance from the end of the first running rail (15a), it being possible for filled pockets (20; 20a-c) to be guided away via said second running rail, and **in that** the filling apparatus (30) has transporting apparatuses (24, 24a; 25, 25a), which are designed for transporting pockets (20; 20a-c) from the end of the first running rail (15a), by way of the first, second and third apparatuses (26, 26a; 27; 27a, b; 28; 28a, b), to the start of the second running rail (15b), wherein the filling apparatus (30) preferably has an upper transporting apparatus (24, 24a) and a lower transporting apparatus (25, 25a), which are arranged parallel to one another and of which the movements are synchronized with one another, **in that** the upper transporting apparatus (24, 24a) is designed for transporting the carriage (11) of a pocket (20; 20a-c), and **in that** the lower transporting apparatus (25, 25a) is designed for transporting the at least one end (16) of the material web (18) which has been released from the carriage (11).

11. Transporting apparatus (10) according to Claim 10, **characterized in that** the upper transporting apparatus (24, 24a) comprises an endlessly circulating transporting means (24a), which carries a plurality of running-rail sections (15c) which, for the purposes of receiving and transferring carriages (11), respectively, can be respectively connected, in an aligned and seamless manner, to the end of the first running rail (15a) or to the start of a second running rail (15b), respectively, and the lower transporting apparatus (25, 25a) preferably comprises an endlessly circulating transporting means (25a), with which a grip element (31) at the at least one end (16) of the material web (18) can be brought into engagement following release of the fastening on the carriage (11).

12. Transporting apparatus (10) according to Claim 10, **characterized by** the arrangement, parallel to the transporting apparatuses (24, 24a; 25, 25a), of an obliquely positioned supporting surface (29), on which, when a pocket (20; 20a-c) is being transported by the filling apparatus (30), the material web (18) of the pocket (20; 20a-c) rests, and is supported, by way of its released at least one end (16), a more or less V-shaped opening being formed in the process between the two ends (16, 17) of the material web (18).

13. Transporting apparatus (10) according to Claim 11, **characterized in that** the at least one end (16) of the pocket (20; 20a-c) can be hooked in on the carriage (11) in order for the pocket (20; 20a-c) to be closed, and **in that** the first apparatus (28; 28a, b) is designed in the form of an unhooking device (28) and has a mechanically displaceable actuating rod (28a), at the end of which is arranged an engagement element (28b), which, for the purpose of opening the pocket, can be brought into engagement with the grip element (31) at the at least one end (16) of the material web (18).

14. Transporting apparatus (10) according to Claim 13, **characterized in that** the third apparatus (27; 27a, b) is designed in the form of a hooking-in device (27) and has a mechanically displaceable actuating rod (27a), at the end of which is arranged an engagement element (27b), which, for the purpose of closing the pocket, can be brought into engagement with the grip element (31) at the at least one end (16) of the material web (18).

15. Transporting apparatus (10) according to Claim 9, **characterized in that** the second apparatus (26, 26a) is designed in the form of a feeding device (26) for feeding items (19; 19a-c) to the opened pocket (20; 20a-c), and **in that** the feeding device (26) has a conveying means (26a), wherein the conveying means is preferably a conveyor belt (26a).

## Revendications

1. Procédé de remplissage des poches (20 ; 20a-c) d'un dispositif de transport (10) se présentant sous la forme d'un convoyeur suspendu, lequel dispositif de transport (10) comprend au moins un chariot (11) monté sur un rail de roulement (15 ; 15a, b) de manière mobile dans la direction du rail de roulement et sur lequel est disposée une poche (20 ; 20a-c) latéralement ouverte et pendant vers le bas et destinée à recevoir un produit à transporter (19, 19a-c), la poche (20 ; 20a-c) étant formée par au moins une bande de matériau (18) flexible et plate à l'état ouvert qui est fixée, par ses deux extrémités, au chariot (11) pour former une boucle de support ou une boucle de transport pendant vers le bas, et la fixation de la bande de matériau (18) au chariot (11) étant conçue de manière amovible à au moins une extrémité (16) de la bande de matériau (18), le procédé comprenant les étapes: (a) approcher une poche (20 ; 20a-c) à l'état fermé, (b) ouvrir la poche (20 ; 20a-c) en détachant la fixation amovible de l'au moins une extrémité (16) de la bande de matériau (18) au niveau du chariot (11), (c) introduir un produit à transporter (19 ; 19a-c) dans la poche ouverte (20 ; 20a-c), (d) fermer la poche (20 ; 20a-c) en fixant à nouveau l'au moins une extrémité (16) de la bande de matériau (18) au chariot (11), et (e) éloigner la poche (20 ; 20a-c) remplie et fermée.

2. Procédé selon la revendication 1, **caractérisé en ce que** l'on approche la poche (20 ; 20a-c) par le biais d'un premier rail de roulement (15a), et **en ce que** l'on éloigne la poche (20 ; 20a-c) remplie et fermée par le biais d'un deuxième rail de roulement (15b) disposé de manière décalée par rapport au premier rail de roulement (15a).

3. Procédé selon la revendication 2, **caractérisé en ce que** l'on transporte la poche (20 ; 20a-c) du premier rail de roulement (15a) au deuxième rail de roulement (15b) à l'aide d'un dispositif de remplissage (30), et **en ce que** l'on procède au remplissage de la poche (20 ; 20a-c) pendant le transport du premier rail de roulement (15a) au deuxième rail de roulement (15b) dans le dispositif de remplissage (30).

4. Procédé selon la revendication 3, **caractérisé en ce que** la poche (20 ; 20a-c) est transportée pendant le transport dans le dispositif de remplissage (30) en étant suspendue à une pièce de rail de roulement (15c) qui correspond à une partie du rail de roulement (15) et qui peut être éventuellement raccordée à une extrémité du premier rail de roulement (15a) ou du deuxième rail de roulement (15b).

5. Procédé selon la revendication 1, **caractérisé en ce que** l'au moins une extrémité (16) de la bande de matériau (18) est conçue de manière amovible par accrochage de l'une des extrémités (16) au chariot (11), **en ce que**, à l'étape (b), l'au moins une extrémité de la bande de matériau (18) est décrochée et **en ce que**, à l'étape (d), l'au moins une extrémité (16) de la bande de matériau (18) est à nouveau accrochée.

6. Procédé selon la revendication 5, **caractérisé en ce que** l'autre extrémité (17) de la bande de matériau est raccordée de manière fixe au chariot (11).

7. Procédé selon la revendication 6, **caractérisé en ce qu'**un élément de préhension (31) est disposé à au moins une extrémité (16) de la bande de matériau (18), et **en ce que**, pour décrocher ou accrocher la bande de matériau (18), un dispositif de décrochage (28) ou un dispositif d'accrochage (27) détecte et soulève ou abaisse l'au moins une extrémité (16) de la bande de matériau (18) au niveau de l'élément de préhension (31) .

8. Procédé selon la revendication 1, **caractérisé en ce que**, à l'étape (c), la poche (20 ; 20a-c) ouverte est maintenue ouverte du fait que la bande de matériau (18), par son au moins une extrémité (16) détachée, vient en appui sur une surface de support inclinée (29) et est supportée par celle-ci pour former une ouverture en forme de V entre les deux extrémités (16, 17) de la bande de matériau (18).

9. Dispositif de transport (10) se présentant sous la forme d'un convoyeur suspendu, lequel dispositif de transport (10) comprend au moins un chariot (11) monté sur un rail de roulement (15 ; 15a, b) de manière mobile dans la direction du rail de roulement et sur lequel est disposée une poche (20 ; 20a-c) ouverte latéralement et pendant vers le bas et destinée à recevoir un produit à transporter (19, 19a-c), la poche (20 ; 20a-c) étant formée par au moins une bande de matériau (18) flexible et plate à l'état ouvert qui est fixée, par ses deux extrémités, au chariot (11) pour former une boucle de support ou une boucle de transport pendant vers le bas, et la fixation de la bande de matériau (18) au chariot (11) étant conçue de manière amovible à au moins une extrémité (16) de la bande de matériau (18); le dispositif de transport (10) comprenant en outre un dispositif de remplissage (30) destiné à remplir les poches (20 ; 20a-c) selon le procédé de l'une des revendications 1 à 8, le dispositif de remplissage (30) comprenant un premier dispositif (28; 28a, b) destiné à ouvrir la poche (20 ; 20a-c), un deuxième dispositif (26, 26a) destiné à remplir la poche (20 ; 20a-c) ouverte et un troisième dispositif (27 ; 27a, b) destiné à fermer la poche (20 ; 20a-c) remplie, les trois dispositifs étant disposés les uns derrière les autres et de manière séparée les uns des autres dans une direction de transport de la poche (20 ; 20a-c).

10. Dispositif de transport (10) selon la revendication 9, **caractérisé en ce que** le dispositif de remplissage (30) est disposé entre l'extrémité d'un premier rail de roulement (15a), par le biais duquel des poches (20 ; 20a-c) à remplir peuvent être approchées, et le début, distant de l'extrémité du premier rail de roulement (15a), d'un deuxième rail de roulement (15b) par le biais duquel des poches (20 ; 20a-c) remplies peuvent être emportées, et **en ce que** le dispositif de remplissage (30) comporte des dispositifs de transport (24, 24a, 25, 25a) qui sont conçus pour transporter des poches (20 ; 20a-c) de l'extrémité du premier rail de roulement (15a) vers le début du deuxième rail de roulement (15b) par le biais des premier, deuxième et troisième dispositifs (26, 26a ; 27 ; 27a, b ; 28 ; 28a, b), le dispositif de remplissage (30) comportant de préférence un dispositif de transport supérieur (24, 24a) et un dispositif de transport inférieur (25, 25a) qui sont disposés parallèlement l'un à l'autre et dont les mouvements sont synchronisés entre eux, **en ce que** le dispositif de transport supérieur (24, 24a) est conçu pour transporter le chariot (11) d'une poche (20 ; 20a-c) et **en ce que** le dispositif de transport inférieur (25, 25a) est conçu pour transporter l'au moins une extrémité (16), détachée du chariot (11), de la bande de matériau (18).

11. Dispositif de transport (10) selon la revendication 10, **caractérisé en ce que** le dispositif de transport supérieur (24, 24a) comprend un moyen de transport (24a) à circulation sans fin qui porte une pluralité de pièces de rail de roulement (15c) qui peuvent chacune être raccordées de manière alignée et sans jonction à l'extrémité du premier rail de roulement (15a) ou au début d'un deuxième rail de roulement (15b) en vue de la prise en charge ou du transfert de chariots (11) et le dispositif de transport inférieur (25, 25a) comprend de préférence un moyen de transport (25a) à circulation sans fin à l'aide duquel un élément de préhension (31) peut être amené en engagement à au moins une extrémité (16) de la bande de matériau (18) après détachement de la fixation au chariot (11).

12. Dispositif de transport (10) selon la revendication 10, **caractérisé en ce que**, parallèlement aux deux dispositifs de transport (24, 24a ; 25, 25a) est disposée une surface de support inclinée (29) sur laquelle, lors du transport d'une poche (20, 20a-c), la bande de matériau (18) de la poche (20 ; 20a-c), par son au moins une extrémité (16) détachée, vient en appui sur le dispositif de remplissage (30), et est supportée par celui-ci, pour former une ouverture ayant approximativement une forme de V entre les deux extrémités (16, 17) de la bande de matériau (18).

13. Dispositif de transport (10) selon la revendication 11, **caractérisé en ce que** l'au moins une extrémité (16) de la poche (20 ; 20a-c) peut être accrochée au chariot (11) pour fermer la poche (20 ; 20a-c), et **en ce que** le premier dispositif (28 ; 28a, b) est conçu comme un dispositif de décrochage (28) et comporte une barre d'actionnement (28a) déplaçable mécaniquement, à l'extrémité de laquelle est disposé un élément d'engagement (28b) qui peut être amené en engagement avec l'élément de préhension (31) à au moins une extrémité (16) de la bande de matériau (18) pour ouvrir la poche.

14. Dispositif de transport (10) selon la revendication 13, **caractérisé en ce que** le troisième dispositif (27 ; 27a, b) est conçu comme un dispositif d'accrochage (27) et comporte une barre d'actionnement (27a) déplaçable mécaniquement à l'extrémité de laquelle est disposé un élément d'engagement (27b) qui peut être amené en engagement avec l'élément de préhension (31) à au moins une extrémité (16) de la bande de matériau (18) pour fermer la poche.

15. Dispositif de transport (10) selon la revendication 9, **caractérisé en ce que** le deuxième dispositif (26, 26a) est conçu comme un dispositif d'amenée (26) destiné à amener le produit à transporter (19 ; 19a-c) à la poche ouverte (20 ; 20a-c) et **en ce que** le dispositif d'amenée (26) comporte un organe de transport (26a), l'organe de transport étant de préférence une bande transporteuse (26a).
